# EUROPEAN PATENT APPLICATION

(11) **EP 2 023 497 A1**
(43) Date of publication of application: **11.02.2009**
(21) Application number: 07767025.5
(22) Date of filing: 04.06.2007
(51) Int. Cl.: H04B 1/16, H04N 7/173

(54) **BROADCAST RECEIVING TERMINAL DEVICE, BROADCAST RECEIVING METHOD, PROGRAM, AND RECORDING MEDIUM**

(30) Priority: 08.06.2006 JP 2006160217
(71) Applicant: Sharp Kabushiki Kaisha, Osaka-shi, Osaka 545-8522 (JP)
(72) Inventor: SHIBAO, Tadahide, Hiroshima 739-0014 (JP)
(74) Representative: Müller - Hoffmann & Partner
(86) International application number: PCT/JP2007/061277
(87) International publication number: WO 2007/142182

(57) **Abstract**

Provided is a broadcast receiving terminal (5), which comprises a reception processing section (21) capable of receiving a group of packets which are broadcasted repeatedly at a predetermined period without change in content, a demultiplex section (22) for selecting target packets from the group of packets received by the reception processing section (21), a TS packet analyzing section (24) for detecting, in the group of packets, a packet that has not been received normally, a timing specification processing section (41) for predicting rebroadcast timing of the packet, and an ON / OFF control section (42) for controlling the demultiplex section (22) so that the demultiplex section (22) stops an operation for at least a part of a period of time which comes before the rebroadcast timing has come and starts again the operation at the rebroadcast timing.

## Description

### TECHNICAL FIELD

The present invention relates to a broadcast receiving terminal device, a program and a recording medium that are used in a system, in which a group of packets is broadcasted repeatedly at a predetermined period without change in content, such as a data carousel method.

### BACKGROUND ART

In recent years, regions where people can receive terrestrial digital broadcasting service have been expanding. The terrestrial digital broadcast does not only allow watching high quality images and listening to high quality sounds, but also, in the terrestrial digital broadcast, an accompanying content file such as textual information can be broadcasted at the same time as the images and sounds to be watched and listened to are broadcasted, so that the content file can be received and reproduced by a broadcast receiving terminal device.

In the terrestrial digital broadcast, the content file is segmented into TS packets and the TS packets are transmitted. Further, in the terrestrial digital broadcast, considering a case where a certain TS packet fails to be received, i.e. a TS packet loss occurs, due to bad reception sensitivity of the broadcast wave, TS packets that constitute a content file are transmitted by a data carousel method (for example, see Nonpatent Document 1).

More specifically, in the terrestrial digital broadcast, packets are repeatedly transmitted at a predetermined period without change in content. Accordingly, even in a case where a packet loss occurs, a broadcast receiving terminal device can received the packet by continuing to wait for the packet.
[Nonpatent Document 1] Mitsutoshi HATORI ed.: "1-segu-housou-kyoukasyo", Japan, Impress, June 21, 2005

### DISCLOSURE OF INVENTION

With the conventional arrangement, as a period is shorter, special problems do not arise, whereas, as the period is longer, it takes a longer time for the broadcast receiving terminal device to continue to wait. In the latter case, the broadcast receiving terminal device keeps checking whether the packet is received or not while waiting, which causes a problem of increase in power consumption. The period is not fixed but varies depending on various factors, for example, a broadcast station, a content of broadcast, or a period of time of broadcast.

The present invention is accomplished in view of the above problem. An object of the present invention is to realize a broadcast receiving terminal device that, in a case where a packet loss occurs, can receive the packet that is repeatedly transmitted, and reduce power consumption.

In order to achieve the object, a broadcast receiving terminal device of the present invention includes: receiving means for receiving a group of packets which are repeatedly broadcasted at a predetermined period without change in content; selecting means for selecting target packets from the group of packets received by the receiving means; packet missing detecting means for detecting a packet, in the group of packets, that has not been received properly; rebroadcast timing predicting means for predicting rebroadcast timing of the packet detected by the packet missing detecting means; and control means for controlling the selecting means so that the selecting means (i) stop an operation for at least a part of a period of time which comes before the rebroadcast timing has come and (ii) start again the operation at the rebroadcast timing.

Further, in order to achieve the object, a broadcast receiving method of the present invention includes the steps of: (a) receiving a group of packets that are repeatedly broadcasted at a predetermined period without change in content, and (b) selecting target packets from the packet group received in the step (a); (c) detecting, in the group of packets, a packet that has not been received properly; (d) predicting rebroadcast timing of the packet detected in the step (c); and (e) controlling the step (b) such that (i) the step (b) is stopped for at least a part of a period of time which comes before the rebroadcast timing has come, while the step (b) is carried out at the rebroadcast timing.

In the arrangement and the method, when a packet missing is detected, rebroadcast timing of the packet is predicted. In accordance with a result of the prediction, the selecting means (or a circuit that carries out the step (c) (selecting step)) stops its operation for at least a part of a period of time which comes before the rebroadcast timing has come, and resumes the operation at the rebroadcast timing.

Consequently, the arrangement makes it possible to reduce power consumption of a broadcast receiving terminal device, compared with an arrangement in which selecting means continues to constantly work for waiting for rebroadcasting of the packet. Even though the selecting means does not work constantly, the selecting means resumes the operation at the rebroadcast timing, with the result that the broadcast receiving terminal device can try to receive a packet that failed to receive, without any problems. This can improve a possibility to properly obtain packets, even though the packets are transmitted via a broadcast wave that can possibly cause such the packet loss.

The period of time in which the operation is stopped is preferably from a time point when one period elapsed after the selecting means has successfully received packets, to the rebroadcast timing.

Further, in addition to the arrangement, the rebroadcast timing predicting means may predict predicts the rebroadcast timing based on a result obtained when it accessed, via a network, to a broadcast period database in which the predetermined period in the broadcast is stored.

In the arrangement, the rebroadcast timing is predicted based on a result obtained when the rebroadcast timing predicting means accessed to the broadcast period database via a network, thereby resulting in that a computing amount of the broadcast receiving terminal device, which is necessary for determining the rebroadcast timing, can be reduced. Further, if a correct broadcast period is stored in the broadcast period database, then it is possible to accurately predict the rebroadcast timing.

In addition to the arrangement, the rebroadcast timing predicting means may analyze the group of packets received by the receiving means so as to predict the rebroadcast timing.

In the arrangement, since the rebroadcast timing predicting means analyzes the group of packets received by the receiving means so as to predict the rebroadcast timing, if a broadcast wave can be received, then it is possible to predict the rebroadcast timing. In view of this, differently from the arrangement in which the rebroadcast timing predicting means accesses to the broadcast period database via a network, such a situation does not occur in which, even though a broadcast wave can be received, the rebroadcast timing cannot be predicted because the broadcast receiving terminal device cannot be connected to the broadcast period database. Consequently, as an arrangement for determining rebroadcast timing, the arrangement makes it possible to more accurately determine the rebroadcast timing, compared with a case of a broadcast receiving terminal device that only has the arrangement in which the rebroadcast timing is predicted based on a result obtained when the broadcast receiving terminal accessed to the broadcast period database via a network. Further, since it is not required to provide a new device such as the broadcast period database, the arrangement can be comparatively easily put into practice.

Moreover, in addition to the arrangement, the broadcast receiving terminal device of the present invention may further include notification means for, in a case where the packet missing detecting means detects a packet loss, notifying a user to move to a position in a good radio wave condition until the rebroadcast timing has come.

In the arrangement, in a case where a packet missing is detected, the user is notified by notification from the notification means that the user had better move to a position in a good radio wave condition until the rebroadcast timing has come. In this regard, if the user moves to the position in a good radio wave condition according to the notification, then it is possible that the broadcast receiving terminal device more surely obtains a packet that has not been received.

Further, in addition to the arrangement, the broadcast receiving terminal device of the present invention may further include navigation means for detecting a present position of the broadcast receiving terminal device, and for carrying out navigation of a route from the present position to a destination. In such the broadcast receiving terminal device, the notification means may include: movable range detection means for detecting a movable range in which the broadcast receiving terminal device can move until the rebroadcast timing has come; radio wave condition map acquisition means for accessing to a radio wave condition database in which places and radio wave conditions are stored so as to be related to each other, and for acquiring a radio wave condition map indicative of a radio wave condition in each of the places in the movable range; and navigation control means for (i) searching a place in the movable range, in which place a radio wave condition is better than a predetermined level, and via which place an increase in moving distance to the destination is minimum, and (ii) causing the navigation means to correct the navigation so that the user reaches the destination via the place.

In the arrangement, a place in a movable range in which the broadcast receiving terminal device can move until the rebroadcast timing has come, in which place radio wave condition is better than a predetermined level in the radio wave condition map acquired from the radio wave condition database, and via which place an increase in moving distance to the destination is minimum, is searched. Further, the navigating means is caused to correct the navigation so that the broadcast receiving terminal device reaches the destination via the place.

On this account, the broadcast receiving terminal device can more surely obtain a packet that failed to be received, and the user can reach the destination with taking less roundabout path.

In addition to the arrangement, the broadcast receiving terminal device of the present invention may further include history storage means for detecting a present position of the broadcast receiving terminal device, and for storing a history of a radio wave condition at the present position so as to correlate with the present position. In the broadcast receiving terminal device, the notification means may (i) search, from positions stored in the history storage means, a position in which a radio wave condition is better than a predetermined level and to which the user can reach until the rebroadcast timing has come, and (ii) notify the user to move the position.

In the arrangement, in a case where a packet loss occurs, a position in which a radio wave condition is better than a predetermined level and to which the user can reach until the rebroadcast timing has come is searched from positions stored in the history storage means, and the user is notified to move to the position.

As such, it is possible to propose a place in a good radio wave condition to a user, differently from the arrangement in which rebroadcast timing is simply notified to a user such that the user had better move to a position in a good radio wave condition until the rebroadcast timing has come. Consequently, it is possible that the user can more accurately move to a position in a good radio wave condition, which allows the broadcast receiving terminal device to more accurately obtain a packet that failed to be received.

Furthermore, the position to be notified is determined by referring to the history storage means provided in the broadcast receiving terminal device itself, without communicating with an external device such as the radio wave condition database. In this regard, the arrangement can be comparatively easily put into practice, and in addition, more surely notify a user of a position in a good radio wave condition.

Examples of the broadcast receiving terminal device encompass a mobile television receiver, a mobile radio receiver, a mobile phone device, a PHS (Personal Handyphone System), a navigation system, a PDA (Personal Digital Assistant), a mobile game terminal, and the like.

The broadcast receiving terminal device may be realized by hardware, or may be realized by causing a computer to execute a program. More specifically, a program of the present invention is a program that causes a computer to function as each of the means provided in any of the above broadcast receiving terminal device, and the program is stored in a recording medium of the present invention.

For example, when a computer retrieves and executes a program in the recording medium, the computer functions as the broadcast receiving terminal device. This can realize a broadcast receiving terminal device with reduced power consumption, similarly to the broadcast receiving terminal device.

According to the present invention, when a packet missing is detected, rebroadcast timing of the packet is predicted. In accordance with a result of the prediction, selecting means stops its operation for at least a part of a period of time which comes before the rebroadcast timing has come, and resumes the operation at the rebroadcast timing. Therefore, in transmitting packets via a broadcast wave that can cause a packet loss, while a possibility to normally obtain the packets is improved, it is possible to realize a broadcast receiving terminal device that can reduce power consumption.

Additional objects, features, and strengths of the present invention will be made clear by the description below. Further, the advantages of the present invention will be evident from the following explanation in reference to the drawings.

### BRIEF DESCRIPTION OF DRAWINGS

Fig. 1 is a block diagram illustrating an arrangement of essential parts of a broadcast receiving terminal as one embodiment of the present invention.
Fig. 2 is a block diagram schematically illustrating an arrangement of a broadcasting system including the broadcast receiving terminal.
Fig. 3 is a view illustrating a relation between a content file broadcasted in the broadcasting system and TS packets.
Fig. 4 is a view illustrating how to transmit TS packets in a data carousel method.
Fig. 5 is a view illustrating a data structure of data stored in a timing table that is provided in the broadcast receiving terminal.
Fig. 6 is a view illustrating a data structure of data stored in a broadcast period database provided in the broadcasting system.
Fig. 7 is a flowchart illustrating operations in sections of the broadcasting system.
Fig. 8 illustrates a modified example of the broadcasting system, and is a view illustrating how to analyze TS packets in a broadcast receiving terminal
Fig. 9 is a flowchart illustrating an operation of the broadcast receiving terminal.
Fig. 10 is a block diagram illustrating an arrangement of essential parts of a broadcast receiving terminal as another embodiment of the present invention.
Fig. 11 is a flowchart illustrating an operation of the broadcast receiving terminal.
Fig. 12 illustrates a modified example of the broadcast receiving terminal, and is a block diagram illustrating an arrangement of essential parts of the broadcast receiving terminal.
Fig. 13 is a block diagram schematically illustrating an arrangement of a broadcasting system including the broadcast receiving terminal.

### [Explanation of Referential Numerals]

5 through 5c: Broadcast Receiving Terminal (Broadcast Receiving Terminal Device)
7: Network
21: Reception Processing Section (Receiving Means)
22: Demultiplex Section (Selecting Means)
24: TS Packet Analyzing Section (Packet Loss Detecting Means)
26: Navigation Processing Section (Navigating Means)
41: Rebroadcast Timing Specification Processing Section (Rebroadcast Timing Predicting Means)
42: ON/OFF Control Section (Control Means)
61: Navigation Control Section (Notification Means)
62: Movable Range Specifying Section (Movable range Detecting Means)
63: Reception Sensitivity Map Acquisition Section (Radio Wave Condition Map Acquisition Means)
64: Reception Sensitivity Map Storage Section (History Storage Means)
65: Moving time Analyzing Section (Navigation Control Means)
66: Control Section (Navigation Control Means)

### BEST MODE FOR CARRYING OUT THE INVENTION

### [First Embodiment]

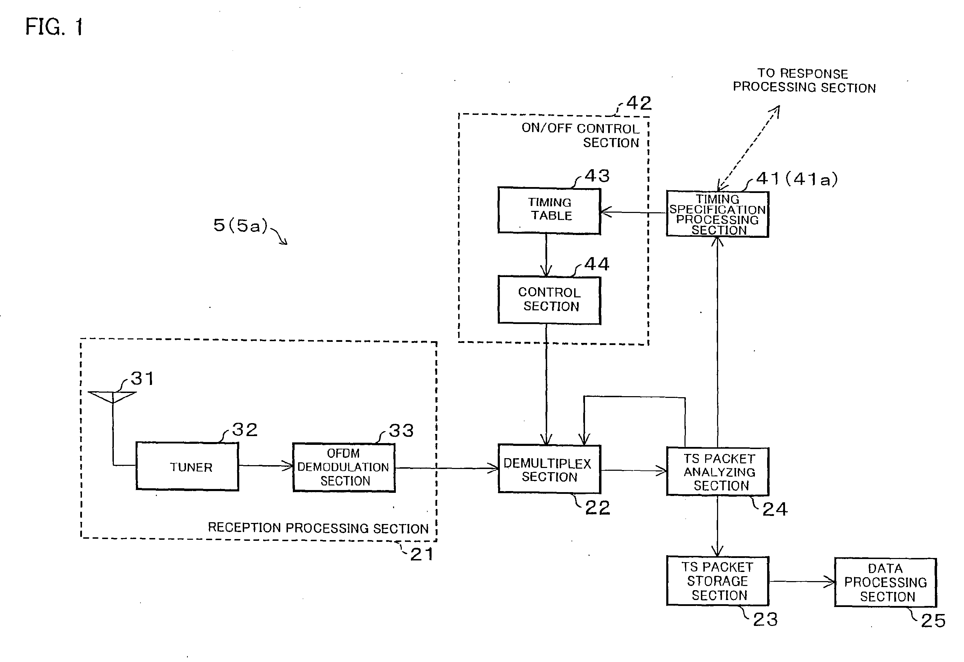

One embodiment of the present invention is explained below with reference to Fig. 1 through 9. A broadcasting system of the present embodiment can be preferably used, for example, as a terrestrial digital broadcasting service system. In the broadcasting system, when a broadcast receiving terminal fails to receive a packet that is a part of content broadcasted by a carousel method, the broadcast receiving terminal calculates timing of retransmitting a packet having the same content as the packet that failed to be received, and stops a function of a packet processing section until the timing has come. This can reduce power consumption of the broadcast receiving terminal.

Before a detailed arrangement of the broadcast receiving terminal is explained, a schematic arrangement of a broadcasting system is briefly explained as follows.

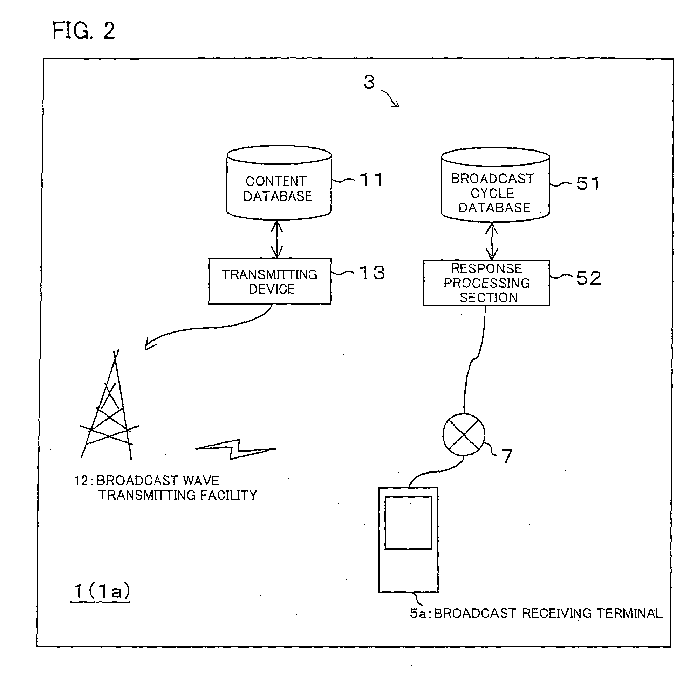

A broadcasting system 1 of the present embodiment includes, as illustrated in Fig. 2, a broadcast station 3 that delivers content via a broadcast wave, and a broadcast receiving terminal (broadcast receiving terminal device) 5 (5a) that can receive the broadcast wave from the broadcast station 3.

The broadcast station 3 includes a content database 11 that stores a content file as data indicative of content, and a transmitting device 13 that transmits the content file stored in the content database 11 via a broadcast wave transmitting facility 12, thereby allowing the content file to be transmitted via a broadcast wave. The content database 11 and the transmitting device 13 are functional blocks that are realized such that a CPU (Central Processing Unit) executes a program stored in a storage device so that peripheral circuits such as an input/ output circuit (not shown) are controlled.

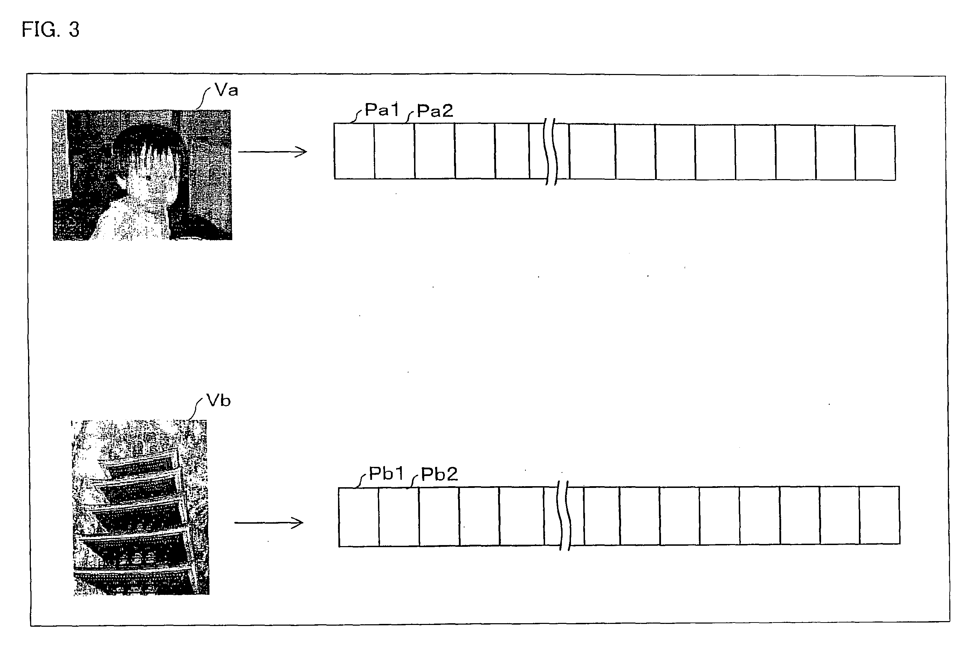

In the broadcasting system 1 of the present embodiment, content is segmented into packets and then transmitted. For example, as illustrated in Fig. 3, the transmitting device 13 can segment a content file as an elementary stream into transport stream packets (TS packets), and transmit a group of the TS packets thus segmented as a transport stream (TS). In the example of Fig. 3, an image Va is represented as TS packets "Pa1..." and an image Vb is represented as TS packets "pb1...". Each TS packet includes (i) an identifier that specifies a transport stream to which the TS packet belongs, (ii) an identifier indicative of a location of the TS packet in the transport stream, and (iii) information indicative of an identifier and the like that specifies the content file. The broadcast receiving terminal 5 that receives each TS packet can reconstruct the group of TS packets thus received into the content file, based on the information.

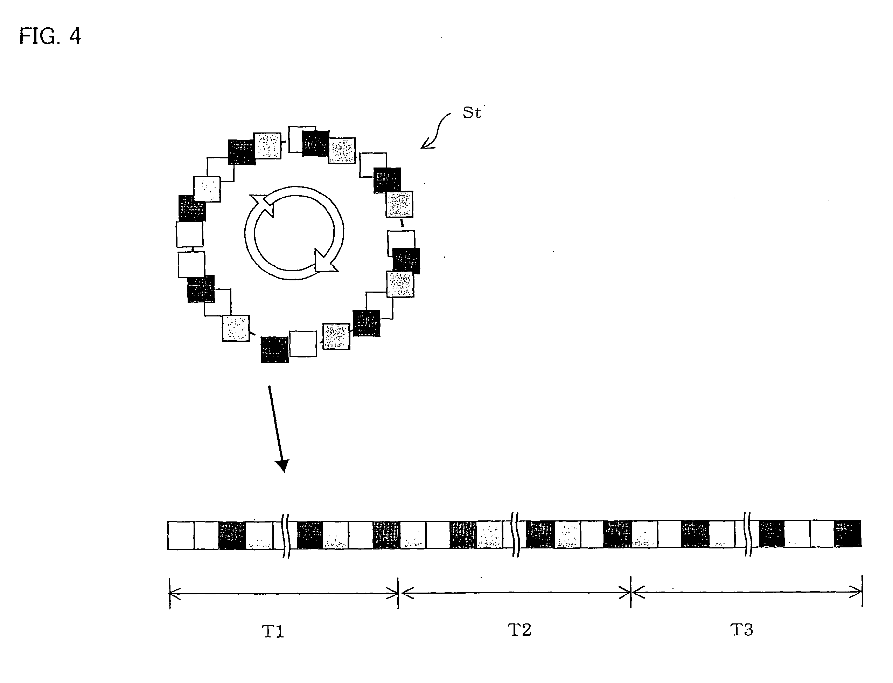

Further, as illustrated in Fig. 4, groups of TS packets that constitute a plurality of different content files can be included in the transport stream. When the transmitting device 13 transmits the transport stream, the plurality of content files can be transmitted in a multiplexed form. In the example of Fig. 4, a transport stream St is constituted by three groups of TS packets that constitute three content files, and the three groups of TS packets are represented by black, gray, and white, respectively.

Furthermore, in the broadcasting system 1 of the present embodiment, the transport stream is delivered by the carousel method. As illustrate in Fig. 4, the transmitting device 13 in the broadcast station 3 repeatedly transmits, at a predetermined period, the transport stream St indicative of a content file (group) having certain content. This causes a TS packet having content identical with a certain TS packet to be transmitted at every predetermined period. In view of this, as described later in detail, even in a case where the broadcast receiving terminal 5 fails to receive the certain TS packet in a period T1, if the terminal 5 successfully receives the TS packet in subsequent periods (T2 ...), the terminal 5 can obtain the TS packet that failed to be received. As such, the broadcasting system 1 can transmit the content file without any problems, even in a case where a packet loss may possibly occur in a transmission path.

Further, in a case where a predetermined condition is completed, for example, a broadcast is repeated predetermined times, the transmitting device 13 in the broadcast station 3 stops repeat transmitting of TS packets of a content file (group), and starts repeat transmitting of TS packets of a subsequent content file (group). The transmitting device 13 assigns a version number to each TS packet when transmitting the TS packet, and changes the version number every time when the repeat transmitting is completed (every time when a content file or a content file group to be transmitted is changed).

On the other hand, as illustrated in Fig. 1, the broadcast receiving terminal 5 of the present embodiment includes: a reception processing section (receiving means) 21 that receives and demodulates a broadcast wave transmitted from the broadcast transmitting facility 12 in the broadcast station 3, so as to generate a transport stream conveyed via the broadcast wave; a demultiplex section (selecting means) 22 that select TS packets that constitute the transport stream; a TS packet storage section 23 that stores the TS packets; a TS packets analyzing section (packet loss detecting means) 24 that analyzes the TS packets thus selected and stores the TS packets in the TS packet storage section 23; and a data processing section 25 that reconstructs a group of the TS packets stored in the TS packet storage section 23 into a content file and processes the content file. Each of the members 21 through 26, and 32 through 67 (a part of the members will be described later) is a functional block that is realized such that a CPU executes a program stored in a storage device so that peripheral circuits such as an input/output circuit (not shown) are controlled.

In the present embodiment, the broadcast wave is, for example, OFDM-modulated (OFDM: Orthogonal Frequency Division Multiplex), and the reception processing section 21 includes an antenna 31, a tuner 32, and an OFDM demodulation 33. In the reception processing section 21, when the tuner 32 selects, from broadcast waves receivable by the antenna 31, a target broadcast wave sent from the broadcast wave transmitting facility 12 in the broadcast station 3, the OFDM demodulation section 33 demodulates a reception signal selected by the tuner 32. Thereby, a transport stream conveyed via the broadcast wave is generated.

On the other hand, the demultiplex section 22 selects TS packets that constitute a necessary content file from TS packets that constitute the transport stream, based on identifiers of the TS packets that constitute the transport stream. Thereby, the demultiplex section 22 separates content files that are multiplexed in the transport stream, so that only TS packets that constitute a target content file can be sent out. Note that the demultiplex section 22 of the present embodiment discards TS packets that are not selected.

The TS packet analyzing section 24 analyzes the TS packets selected by the demultiplex section 22 and determines whether or not the TS packets thus received are normal so that the normal TS packets can be stored in the TS packet storage section 23. In this regard, for example, the demultiplex section 22 determines whether or not any transmission faults that are difficult to be corrected occur, or whether or not content of the TS packets are set in a predetermined format. Hereby, the data processing section 25 can process the content file that is constituted by the TS packets stored in the TS packet storage section 23.

On the contrary, in a case where the TS packets thus received are not normal, the TS packet analyzing section 24 determines that receiving of the TS packets failed (a packet loss occurred). Further, the TS packet analyzing section 24 extracts, from each TS packet that could be received normally, an identifier indicative of a location of the TS packet in the transport stream, and compares the identifiers thus extracted. In a case where a TS packet that should be received between a first TS packet placed at a certain position and a second TS packet placed at another position has not been received, the TS packet analyzing section 24 determines that the packet loss occurs.

Note that the TS packet analyzing section 24 may constantly detect a packet loss. However, in order that power consumption of the broadcast receiving terminal 5 is reduced, the TS packet analyzing section 24 of the present embodiment determines whether or not a packet loss occurs only in a case where a signal from an electrical field strength sensor (not shown) provided in the broadcast receiving terminal 5 indicates a weak electrical field.

Moreover, the TS packet analyzing section 24, for example, analyzes TS packets and extracts identifiers indicative of locations of the TS packets in a transport stream, so that it can be determined whether or not transmitting of the transport stream is completed, based on the identifiers. Further, the TS packet analyzing section 24 analyzes TS packets and determines whether or not transmitting of a last one of the TS packets that constitute a content file is completed, so that it can be determined whether or not first receiving of a group of TS packets necessary for decoding the content file is completed.

Furthermore, the TS packet analyzing section 24, for example, instructs the demultiplex section 22 to set a TS packet that failed to be received, to be selected, thereby causing the demultiplex section 22 to reacquire the TS packet.

In the arrangement, even in a case where a TS packet failed to be received in a period T1, if the TS packet is successfully received in the subsequent periods (T2 ...), similarly to the above, the TS packet analyzing section 24 can store the TS packet in the TS packet storage section 23. When the TS packet that failed to be received is successfully obtained and the entire group of TS packets necessary for decoding a content file is stored in the TS packet storage section 23, the data processing section 25 can process the content file in a similar manner to a case where no packet loss occurs.

In a case where the TS packet analyzing section 24, for example, receives from the demultiplex section 22 a notification that a change of a version number is detected and finds that repeat transmitting of a transport stream that has been received up to then is completed, the TS packet analyzing section 24, for example, accesses the TS packet storage section 23 and checks whether or not there are any packets that failed to be received in the group of TS packets necessary for decoding a target content file. If there are packets that failed to be received, a predetermined error process can be carried out.

Further, the broadcast receiving terminal 5 of the present embodiment includes: a rebroadcast timing specification processing section (hereinafter referred to as a timing specification processing section) 41 that, when the TS packet analyzing section 24 detects a packet loss of a TS packet, predicts a time point when the TS packet is retransmitted; and an ON/OFF control section 42 that causes the demultiplex section 22 to stop an operation until the time point predicted by the timing specification processing section 41. The timing specification processing section 41 and the ON/OFF control section 42 correspond to rebroadcast timing predicting means and control means recited in Claims, respectively.

As described later in detail, the time point of retransmitting may be predicted by analyzing TS packets, but the timing specification processing section 41 of the present embodiment predicts the time point of retransmitting on the basis of a result of accessing to an external section.

More particularly, in a case where an occurrence of a packet loss is detected, the timing specification processing section 41 of the present embodiment sends, to an external section, a query message including (i) a channel ID indicative of a channel in which the packet loss occurred and (ii) loss-timing information indicative of a time point when the packet loss occurred. As such, the timing specification processing section 41 can query about rebroadcast timing when the TS packet that failed to be received is rebroadcasted.

Further, upon receiving a message indicative of the rebroadcast timing from the external section in response to the query message, the timing specification processing section 41 instructs the ON/OFF control section 42 to control ON timing of the demultiplex section 22 so that the demultiplex section 22 operates at the rebroadcast timing of the TS packet. More specifically, the timing specification processing section 41 of the present embodiment starts the operation of the demultiplex section 22 earlier than the rebroadcast timing by just a time required to start the operation of the demultiplex section 22 and a margin that is preset depending on rebroadcast timing.

Moreover, the timing specification processing section 41 can instruct the ON/OFF control section 42 to cause the demultiplex section 22 to stop the operation from the time point when the first receiving is completed until the rebroadcast timing has come. The timing specification processing section 41 of the present embodiment instructs the ON/OFF control section 42 to cause the demultiplex section 22 to stop the operation at the time the first receiving is completed, in order that a period in which the demultiplex section 22 stops operating becomes longer.

Furthermore, the timing specification processing section 41 can instruct the ON/OFF control section 42 to cause the demultiplex section 22 to stop the operation again at the time when a transmitting period of the rebroadcasted TS packet is completed. The TS packet analyzing section 24 or the demultiplex section 22 may observe whether the TS packet is received or not and instruct to stop the operation. However, the timing specification processing section 41 of the present embodiment specifies the time point when a transmitting period of the rebroadcasted TS packet is completed, based on the rebroadcast timing indicated by the response message.

In a case where the timing specification processing section 41 detects that a plurality of packet losses occur, for example, by a notification from the TS packet analyzing section 24, the section 41 transmits query messages in regard to the packet losses, respectively, so that the section 41 can cause the ON/OFF control section 42 to control ON/OFF timing of the demultiplex section 22 in accordance with responses to the query messages. Further, in a case where the timing specification processing section 41 detects that ON periods of the demultiplex section 22, each of the ON periods being set with respect to each TS packet, overlap each other, e.g., in a case where TS packets transmitted at close timing failed to be received, the timing specification processing section 41 can, for example, update the after-mentioned timing table 43 so that the ON periods are connected.

Further, in a case where the timing specification processing section 41 detects, by a notification or the like from the TS packet analyzing section 24, that the rebroadcasted TS packet failed to be received, the timing specification processing section 41 resends the query message, so that the section 41 can cause the ON/OFF control section 42 to control ON/OFF timing of the demultiplex section 22 in accordance with a response to the query message.

Meanwhile, the ON/OFF control section 42 of the present embodiment includes: an ON/OFF timing table (referred to as a timing table) 43 in which timing information indicative of ON / OFF timing is stored; and a control section 44 that controls ON/OFF of the demultiplex section 22 by referring to the timing table 43. The timing specification processing section 41 stores timing information corresponding to rebroadcast timing indicated by a response message, so that the section 41 can instruct ON/OFF timing of the demultiplex section 22.

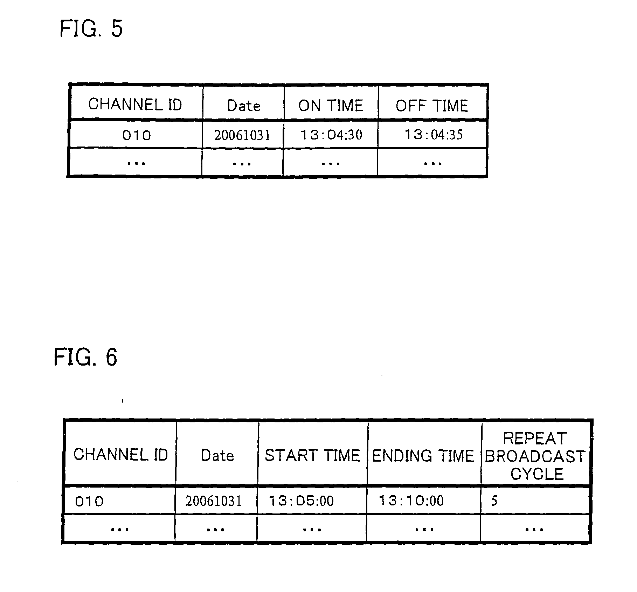

The timing table 43 is, for example, constituted as illustrated in Fig. 5. In the timing table 43, a combination of a date, an ON time, and an OFF time is stored as an ON time point and an OFF time point. In the present embodiment, the timing information is stored so as to correlate with a channel ID.

Further, the control section 44 can stop the demultiplex section 22 at the OFF time point stored in the timing table 43, and start again the operation of the demultiplex section 22 at the ON time point stored in the timing table 43.

As illustrated in Fig. 2, in order to make a response to a query from the timing specification processing section 41, the broadcast station 3 in the broadcasting system 1 according to the present invention includes, as external devices: a broadcast period database 51 that stores a broadcast period of each channel; and a response processing section 52 that makes a response to a query from the timing specification processing section 41 of the broadcast receiving terminal 5 by referring to the broadcast period database 51.

In the broadcast period database 51, for example, as illustrated in Fig. 6, a repeat period of a broadcast (repeat broadcast period) is preliminarily stored so as to correlate with a period of time. In the example of Fig. 6, the period of time is stored as a combination of a date, a start time, and an ending time. In the broadcast period database 51 of the present embodiment, the repeat broadcast period is stored so as to correlate with not only the period of time, but also with a channel ID indicative of a channel, so that the response processing section 52 can make responses to queries about broadcast periods of a plurality of channels.

Further, upon receiving the query message from the timing specification processing section 41 of the broadcast receiving terminal 5 via a network 7, the response processing section 52, for example, searches records stored in the broadcast period database 51 and extracts a record related to the channel ID of the query message and a period of time including a time point indicated by loss-timing information in the query message. As such, the response processing section 52 can obtain a broadcast period.

Furthermore, the response processing section 52, for example, adds the broadcast period to the time point indicated by the loss-timing information in the query message and determines rebroadcast timing of a TS packet that failed to be received at the time point indicated by the loss-timing information, so that the response processing section 52 can send a response message indicative of the rebroadcast timing to the timing specification processing section 41.

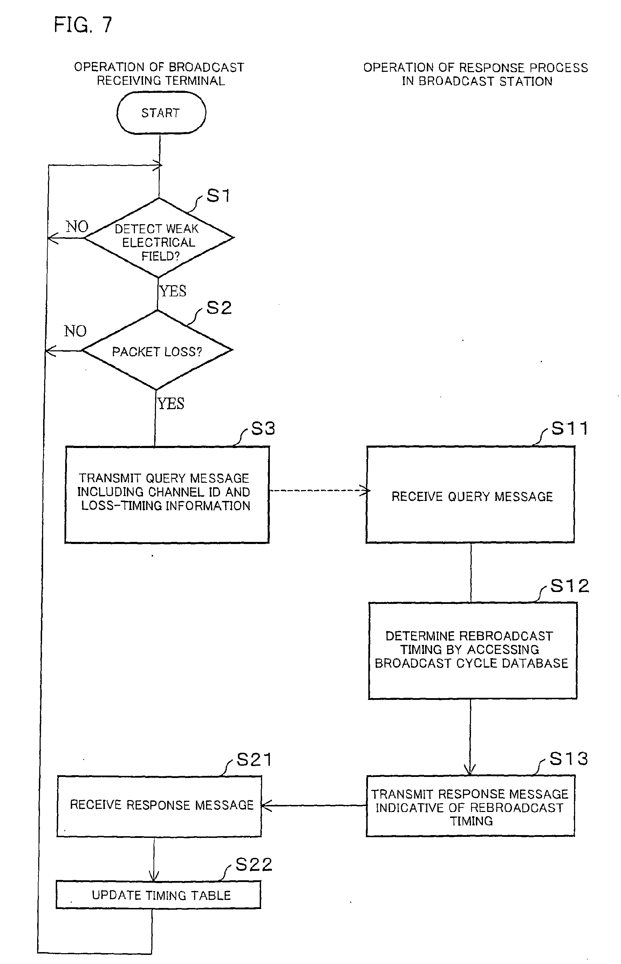

An operation of the broadcasting system 1 in the arrangement is explained below with reference to a flowchart illustrated in Fig. 7. The TS packet analyzing section 24 of the broadcast receiving terminal 5, in Step 1 (hereinafter referred to simply as S1), stands by until a weak electrical field is detected.

When the weak electrical field is detected (in a case of YES in S1), the TS packet analyzing section 24, in S2, determines whether or not a packet loss occurs, based on an analysis result of TS packets from the demultiplex section 22. When no packet loss occurs (in a case of NO in S2), the process of S1 and the process subsequent to S1 are repeated.

When the TS packet analyzing section 24 detects a packet loss (in a case of YES in S2), the timing specification processing section 41, in S3, creates a query message including a channel ID and loss-timing information, and sends the message to the response processing section 5 of the broadcast station 3.

Meanwhile, upon receiving the query message from the timing specification processing section 41 in S11, the response processing section 52 of the broadcast station 3 accesses to the broadcast period database 51, in S12, so as to determine rebroadcast timing, and, in S13, sends a response message indicative of the rebroadcast timing to the timing specification processing section 41.

Upon receiving the response message in S21, the timing specification processing section 41, in S22, updates the timing table 43 in the ON/OFF control section 42 on the basis of the rebroadcast timing indicated by the response message so that ON/OFF timing of the demultiplex section 22 are controlled.

Here, the control section 44 of the ON/OFF control section 42 controls ON/OFF of the demultiplex section 22 in accordance with the timing table 43. Further, the timing specification processing section 41 can instruct the ON/OFF control section 42 to cause the demultiplex section 22 to stop an operation from a time point when first receiving is completed until the rebroadcast timing has come.

As such, when a packet loss occurs, the demultiplex section 22 can be caused to stop the operation until the rebroadcast timing of the TS packet has come such that a selecting process of TS packets by the demultiplex section 22 is stopped. In this way, data acquisition processing (the demultiplex section 22) does not keep a waiting state by the rebroadcast timing, but the operation of the data acquisition processing is resumed at the rebroadcast timing. This allows a reduction in power consumption of the broadcast receiving terminal 5. Further, while the demultiplex section 22 does not constantly work, operation start timing of the demultiplex section 22 is controlled so that the demultiplex section 22 can properly select a TS packet at rebroadcast timing of the TS packet. As a result, the broadcast receiving terminal 5 can try to receive a TS packet that failed to be received, without any problems.

The timing specification processing section 41 may compare (i) a time point when a TS packet that failed to be received had been actually transmitted with (ii) predicted rebroadcast timing, for example, by observing TS packets selected by the demultiplex section 22, so that the predicted result may be corrected such that a difference between them becomes less. If ON/OFF timing of the demultiplex section 22 is determined by correcting the predicted rebroadcast timing as such, then it is possible to more precisely determine the ON/OFF timing of the demultiplex section 22.

In the above description, the timing specification processing section 41 sends a query to the response processing section 52 that is provided externally, so as to predict rebroadcast timing of a TS packet, but how to predict the rebroadcast timing is not limited to this. For example, the timing specification processing section 41 may analyze a group of TS packets that have been already obtained so as to predict rebroadcast timing of a TS packet that failed to be received.

For example, in a case where a single transport stream is constituted by M pieces of TS packets, the timing specification processing section 41 measures a time from start to end of receiving N pieces of the TS packets, and calculates a broadcast interval Tu of the TS packets (an interval between a time point when transmitting of one TS packet starts and a time point when transmitting of a subsequent TS packet starts). Then, the timing specification processing section 41 multiplies the number "M" of the TS packets by the broadcast interval Tu of the TS packets, so that a broadcast period can be specified. The timing specification processing section 41 may specify a broadcast period by measuring a time from start to end of receiving a single transport stream.

In the above description, the ON/OFF control section 42 of the broadcast receiving terminal 5 stops the demultiplex section 22 from completion of receiving target TS packets until next rebroadcast timing of a TS packet that failed to be received has come, but this is not limited. For example, in a case where some TS packets have been successfully obtained, the demultiplex section 22 may be stopped while these TS packets are rebroadcasted. When the demultiplex section 22 is controlled such that the demultiplex section 22 (i) stops its operation for at least a part of a period of time which comes before the rebroadcast timing has come and (ii) resumes the operation at the rebroadcast timing, then it is possible to obtain the same effects.

The following explanation deals with such an exemplary arrangement that: while the timing specification processing section 41 analyzes a group of TS packets that have been already obtained, and specifies a broadcast interval Tu and a broadcast period of TS packets, the timing specification processing section 41 stops the demultiplex section 22 during a rebroadcast period of the TS packets that have been successfully obtained.

More specifically, a TS packet storage section 23 of a broadcast receiving terminal 5a as a modified example includes a storage area, e.g., a heap area or the like, in which all TS packets (M pieces of TS packets) that constitutes a transport stream can be stored. A TS packet analyzing section 24 can store each obtained TS packet in the storage area.

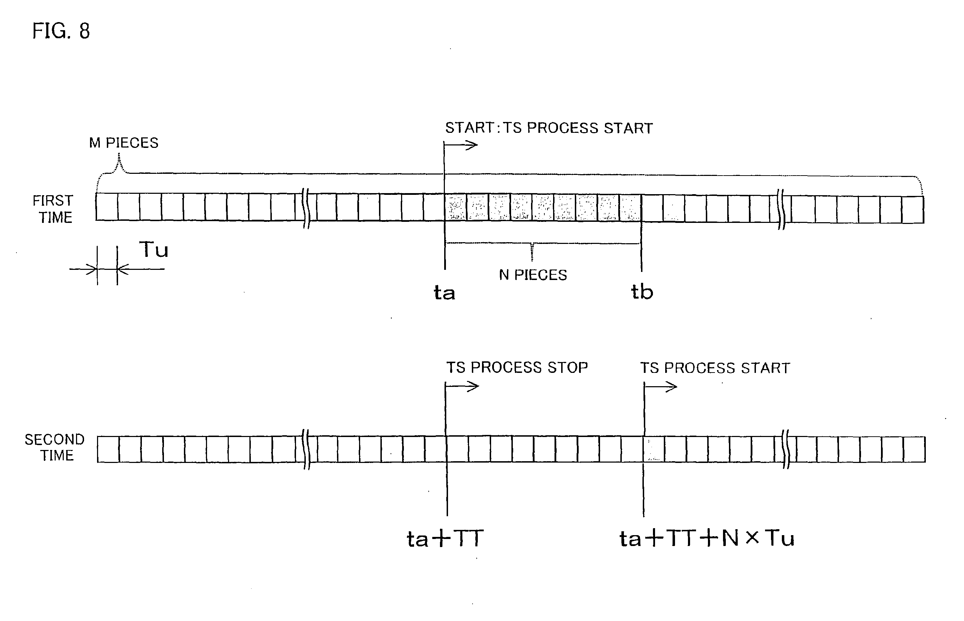

On the other hand, a timing specification processing section 41a (see Fig. 1) that is provided instead of the timing specification processing section 41 can store a starting time point ta of a receiving process in first receiving of a group of TS packets that constitute a content file, as illustrated on an upper side of Fig. 8.

Further, while the timing specification processing section 41a observes whether or not each TS packet is properly received, for example, according to a notification or the like from the TS packet analyzing section 24, the timing specification processing section 41a stores an end time point of receiving one previous TS packet. Further, in a case where a group of N pieces of TS packets from the starting time point ta could be properly received and its subsequent TS packet failed to be received, the timing specification processing section 41a can calculate a broadcast interval Tu of the TS packets by use of (i) an end time point of receiving one previous TS packet (in this case, a time point tb at which the N pieces of TS packets have been received) and (ii) the number "N" of the TS packets that have been properly received and stored in the TS packet storage section 23. More particularly, the timing specification processing section 41 a calculates the broadcast interval Tu according to the following expression: Tu= (tb-ta)/N.

Moreover, the timing specification processing section 41a can calculate, by use of the TS packet number M and the broadcast interval Tu, a broadcast period TT such that TT=Tu×M, and find out operation stop timing (OFF timing) of a demultiplex section 22 as ta+TT, and operation start timing (ON timing) as ta+TT+Tu×N. The timing specification processing section 41a can instruct ON and OFF timing with respect to an ON/OFF control section 42, in a similar manner to the timing specification processing section 41. Practically, the operation start timing is calculated by deducting, from ta+TT+Tu×N, a period that is required for the ON/Off control section 42 to instruct the demultiplex section 22 to resume the processing operation and check whether the processing operation thereof is normal.

Here, after a packet loss occurs in a first reception, when a TS packet that failed to be received is successfully received, the timing specification processing section 41a can memorize its starting time point as ta, repeat the operation, and instruct ON and OFF timing with respect to the ON/OFF control section 42.

In the arrangement, instead of sending a query about rebroadcast timing to a response processing section 52, the timing specification processing section 41 a determines the rebroadcast timing by analyzing TS packets that have been received already. In this case, a broadcast period database 51 and the response processing section 52 are skippable in a broadcasting system 1a, and the timing specification processing section 41a may be unable to communicate with a network 7.

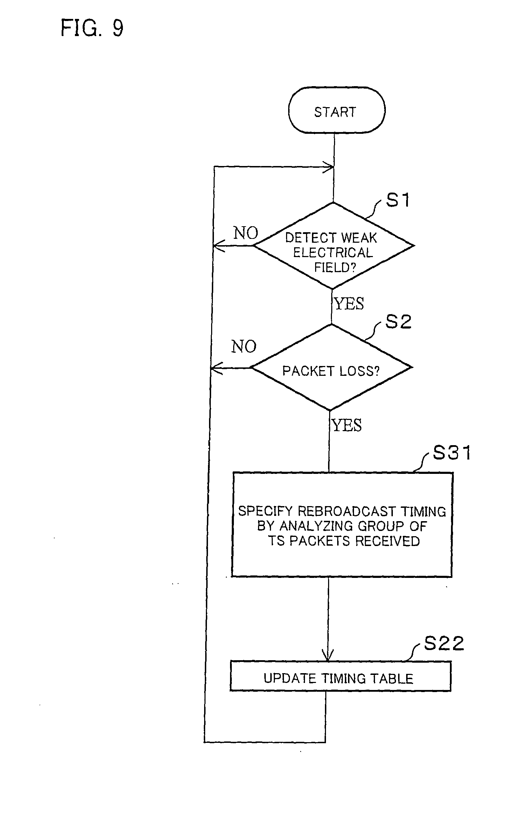

The broadcast receiving terminal 5a according to the arrangement, as illustrated in Fig. 9, detects whether a packet loss occurs or not in S1 and S2, in the almost similar manner to Fig. 7. Note however that the timing specification processing section 41a of the modified example specifies ON and OFF timing by not sending a query, but by analyzing TS packets that have been obtained already. Therefore, the timing specification processing section 41a carries out a process in S31, instead of S3 through S21 illustrated in Fig. 7.

More specifically, when it is detected that a packet loss occurs (in a case of YES in S2), the timing specification processing section 41a, in S31, analyzes a group of TS packets obtained and specifies rebroadcast timing. Then, similarly to Fig. 7, the timing specification processing section 41a, in S22, updates a timing table 43 in the ON/OFF control section 42, and controls ON/OFF timing of the demultiplex section 22.

Even in the arrangement, a control section 44 of the ON/OFF control section 42 controls ON/OFF of the demultiplex section 22 in accordance with the timing table 43. Accordingly, when the packet loss occurs, the demultiplex section 22 is caused to stop its operation until the rebroadcast timing of the TS packet, so that a process of selecting a TS packet by the demultiplex section 22 can be stopped. This allows a reduction in power consumption of the broadcast receiving terminal 5a. Further, while the demultiplex section 22 does not constantly work, operation start timing of the demultiplex section 22 is controlled so that the demultiplex section 22 can properly select a TS packet at a rebroadcast timing of the TS packet. As a result, the broadcast receiving terminal 5 can try to receive a TS packet that failed to be received, without any problems.

Further, in the exemplary arrangement, even in a case where the broadcast receiving terminal 5a cannot be communicated with the response processing section 52 via the network 7, if TS packets can be obtained by receiving a broadcast, then it is possible to determine rebroadcast timing of each TS packet. Differently from the arrangement of the broadcast receiving terminal 5 that queries the external device via the network 7, the arrangement of the broadcast receiving terminal 5a does not cause such a situation in which, even though a broadcast wave can be received, the broadcast receiving terminal 5a cannot be connected to an external device.

Consequently, as an arrangement for determining rebroadcast timing, the arrangement of the broadcast receiving terminal 5a makes it possible to more surely determine the rebroadcast timing, compared with a case of a broadcast receiving terminal that only has the arrangement in which that rebroadcast timing is predicted based on a result obtained when the broadcast receiving terminal accessed to the external device via the network 7. Furthermore, it is not necessary to provide new external devices such as the broadcast period database 51 and the response processing section 52 in the broadcasting system 1a, thereby resulting in that the arrangement of the broadcast receiving terminal 5a can be comparatively easily put into practice.

The above description deals with the arrangement in which, in determining rebroadcast timing, the timing specification processing section 41a always analyzes TS packets that have been already obtained. However, similarly to the timing specification processing section 41, the timing specification processing section 41 a may also have a function to specify the rebroadcast timing by sending a query to the response processing section 52, and select the function depending on a situation. As an example, while the timing specification processing section 41 basically specifies rebroadcast timing by accessing to the response processing section 52 so that a computing amount of the broadcast receiving terminal is reduced, the timing specification processing section 41 may determine the rebroadcast timing by analyzing TS packets that have been already obtained, in a case where a communication with the response processing section 52 is not available.

### [Second Embodiment]

A second embodiment deals with an arrangement in which a user is prompted to move to a place in a better reception state at predicted rebroadcast timing. The arrangement is applicable to each of the arrangements above. The following explains an example in which the arrangement is applied to the following broadcast receiving terminal. That is, the following explains an exemplary arrangement in which a broadcast receiving terminal has a navigation function to a destination, and navigates a user to a place via which a distance variation that is necessary to reach the destination is minimum.

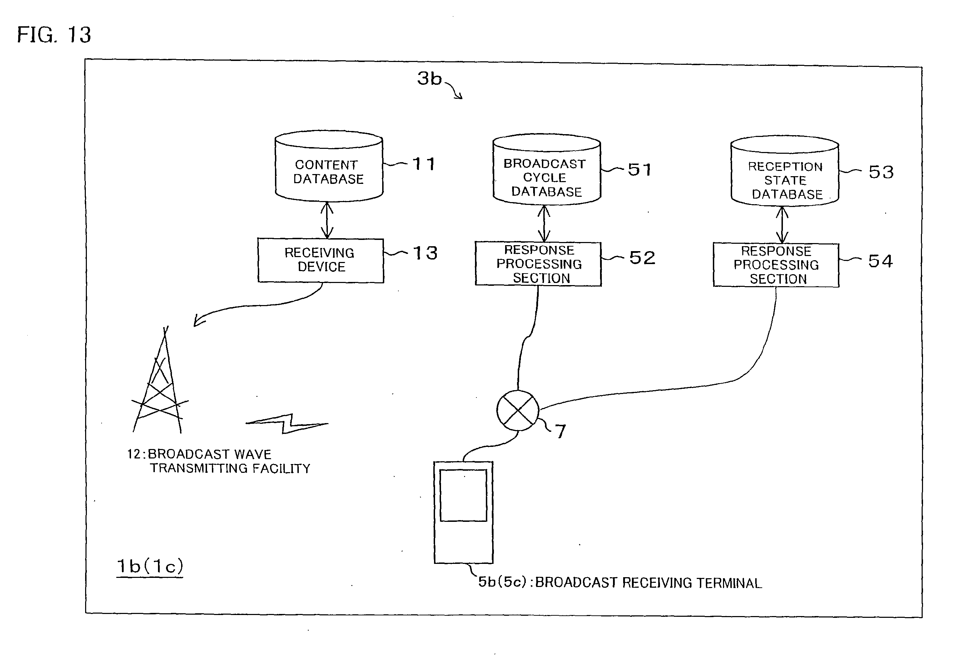

A broadcasting system 1b of the present embodiment includes, as illustrated in Fig. 13, a broadcast station 3b that delivers content via a broadcast wave, and a broadcast receiving terminal 5b that can receive the broadcast wave from the broadcast station 3b. The broadcast station 3b includes, in addition to the arrangement of the broadcast station 3 in Fig. 2, a reception state database 53 in which a reception state of each place is stored, and a response processing section 54 that makes a response to a query from the broadcast receiving terminal 5b by referring to the reception state database 53.

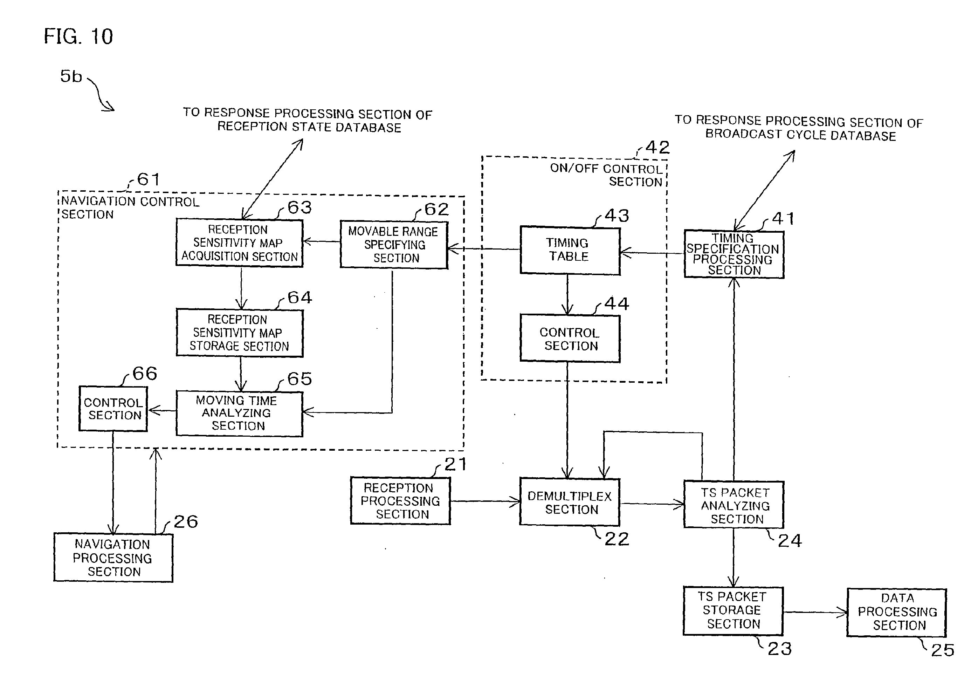

The broadcast receiving terminal 5b is especially preferably used as a mobile broadcast receiving terminal such as a mobile phone device, and, as illustrated in Fig. 10, includes a navigation processing section (navigation means) 26, in addition to the arrangement of the broadcast receiving terminal 5 in Fig. 1. The navigation processing section 26 includes a position sensor (not shown) that detects a position of the broadcast receiving terminal 5b, e.g., a GPS (Global Positioning System). This allows the navigation processing section 26 to display a present position of the broadcast receiving terminal 5b on a map, based on map data preliminarily stored, or map data obtained via a network 7, a broadcast wave, or the like. The navigation processing section 26 of the present embodiment further includes a sensor (not shown), for example, an acceleration sensor, a magnetic sensor, a car speed sensor, a height indicator, or the like. This allows the navigation processing section 26 to more precisely specify the position of the broadcast receiving terminal 5b by correcting a position detection result according to the position sensor by referring to a detection result of the sensor and the map data.

The navigation processing section 26 can propose a transfer pathway between any two points by referring to the map data. For example, upon receiving an input of a destination, the navigation processing section 26 can propose a transfer pathway from the present position of the broadcast receiving terminal 5b to the destination. Further, the navigation processing section 26 can calculate a length (distance) of the transfer pathway by referring to the map data.

Moreover, the broadcast receiving terminal 5b of the present embodiment includes a navigation control section (notification means) 61 that (i) searches a place (a proposed place to move) in a movable range in which a user can move from a present time until rebroadcast timing specified by the timing specification processing section 41 has come, which place is in a good reception state, and via which place a distance variation that is necessary to reach a destination is minimum, and (ii) instructs the navigation processing section 26 to navigate the user to the proposed place to move.

The navigation control section 61 sends a query to an external device so as to obtain a place in a good reception state. More specifically, the navigation control section 61 includes: a movable range specifying section (movable range detecting means) 62 that specifies a movable range in which a user can move from the present time until the rebroadcast timing specified by the timing specification processing section 41 has come; a reception sensitivity map acquisition section (radio wave condition map acquisition means) that sends, to the response processing section 54 via a network 7, a query about a reception state (a reception sensitivity map) in each place in the movable range; a reception sensitivity holding section (a reception sensitivity map storage section) 64 that holds a reception sensitivity map acquired by the reception sensitivity map acquisition section 63; a moving time analyzing section 65 that (i) analyzes a moving time to each place in a movable range in which a user can move until rebroadcast timing has come, and in which a reception state is not worse than a predetermined level, based on the movable range specified by the movable range specifying section 62 and the reception sensitivity map held in the reception sensitivity map holding section 64, and (ii) searches a place via which a distance variation that is necessary to reach a destination is minimum; and a control section 66 that instructs the navigation processing section 26 to carry out navigation of the place. The moving time analyzing section 65 and the control section 66 correspond to navigation control means recited in Claims.

The movable range specifying section 62 calculates a distance per hour of the broadcast receiving terminal 5b, for example, based on the detection result of the position sensor, and determines, as a place within the movable range, each place whose distance from the present position is not more than a product of its distance per unit hour and a time until the rebroadcast timing has come. When a variation in travel vector quantity per unit time is detected, for example, by the detection result(s) of the acceleration sensor and/or the position sensor, the control section 66 instructs the movable range specifying section 62 to recalculate a movable range and updates the navigation process of the proposed place based on the recalculation result.

In regard to each place, for example, (i) in the movable range specified by the movable range specifying section 62 and (ii) which is shown as a place in which a reception sensitivity is more than a predetermined level in the reception sensitivity map stored in the reception sensitivity map holding section 64, the moving time analyzing section 65 obtains a distance variation that is necessary to reach a destination, for example, by sending a query to the navigation processing section 26, so that the moving time analyzing section 65 can extract a place whose variation is minimum among the places. Further, while the control section 66 prompts, by a message or the like, a user to move to the place until the rebroadcast timing has come so that the use can obtain a TS packet that failed to be received, the control section 66 can instruct the navigation processing section 26 to display a moving route to the place (proposed place to move).

In a case where a destination has not been set yet, the control section 66 of the present embodiment does not especially carry out the navigation process of navigating to the proposed place. Further, in a case where the a motion detecting sensor made up of the acceleration sensor and the like does not detect that the broadcast receiving terminal 5b moves, the control section 66 determines that a destination has not been set yet.

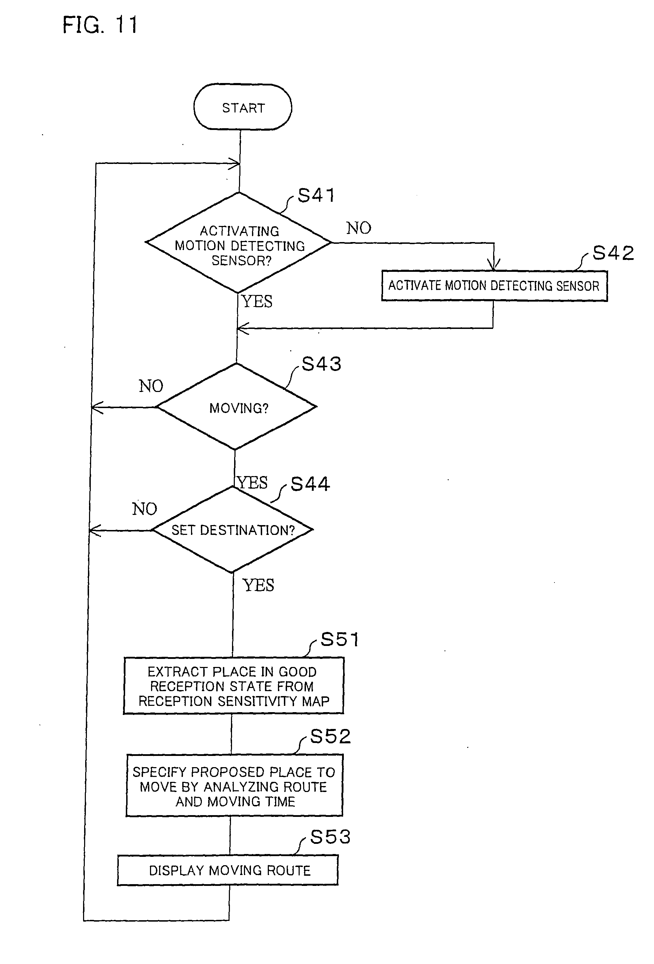

In the arrangement, when the timing table 43 is updated, the broadcast receiving terminal 5b carries out processes illustrated in Fig. 11. More particularly, in S41, the control section 66 of the broadcast receiving terminal 5b checks whether or not the motion detecting sensor is activated. In a case where the sensor is not activated, the control section 66 activates the motion detecting sensor in S42.

Moreover, in S43, the control section 66 checks whether the broadcast receiving terminal 5b moves or not, based on a detection result of the motion detecting sensor. In a case where it is determined that the broadcast receiving terminal 5b moves (in a case of YES), the control section 65, in S44, checks whether a destination is set or not, for example, by accessing to the navigation processing section 26. In a case where the broadcast receiving terminal 5b does not move (in a case of NO in S43), or in a case where a destination is not set (in a case of NO in S44), the broadcast receiving terminal 5b terminates the navigation process without indicating a proposed place to move especially.

On the other hand, in a case where a destination is set (in a case of YES in S44), the moving time analyzing section 65, in S51, extracts places in a good reception state from the reception sensitivity map. Furthermore, the moving time analyzing section 65, in S52, analyzes a route (transfer trajectory) to each place thus extracted and each moving time, and specifies, as a proposed place to move, a place via which a distance variation that is necessary to reach a destination is minimum. Further, the control section 66, in S53, instructs the navigation processing section 26 to display a moving route to the proposed place.

With the arrangement, it is possible to prompt a user to move to a place in a better reception state until predicted rebroadcast timing has come, thereby resulting in that a TS packet that failed to be received can be more surely obtained. Moreover, a proposed place to move is a place via which a distance variation that is necessary to reach a destination is minimum, so that a user can reach the destination without taking a roundabout path.

The control section 66 may observe a reception sensitivity of the reception processing section 21. In this case, at a point when the reception sensitivity becomes high, the control section 66 may notify a user that the reception sensitivity is high. One example of a notification method is such that a user is instructed to stop at a present position at the point by display or voice notification. In this case, the control section 66 may calculate how long it will take to obtain a content file at the present position, e.g., calculate, for example by referring to the timing table 43, how long it will take until rebroadcast timing of last one of TS packets that have not been received yet has come, and then notify the user of the time.

In the above description, the control section 66 obtains a reception sensitivity map by accessing to the response processing section 54 that is provided externally. Meanwhile, the control section 66 carries out navigation to a place (i) which is shown as a place in which a reception sensitivity is good in the reception sensitivity map, (ii) which place is in a movable range in which a user can move until rebroadcast timing has come, and further (iii) via which place a distance variation that is necessary to reach a destination is minimum. However, the arrangement is not limited to this.

With an arrangement in which a user is notified to move a place in a good radio wave condition until the rebroadcast timing has come, it is possible to avoid an unstable reception state and facilitate an effective content acquisition (TS packet reception). For example, if a time until the rebroadcast timing has come is simply notified, it is still possible to obtain such an effect to some extent.

However, as has been already described in the present embodiment, if the broadcast receiving terminal 5b proposes a place having a good reception sensitivity, it is not necessary for a user to look for such a place having a good reception sensitivity, thereby allowing the user to avoid trouble. Further, since the broadcast receiving terminal 5b proposes a place having a good reception sensitivity as such, the user-can move to the place having a good reception sensitivity more surely than a case where the user presumes a reception sensitivity.

As a modified example of the broadcast receiving terminal 5b, explained below is an arrangement in which a place having a good reception sensitivity is proposed by referring a past reception state history. The arrangement is applicable to any of the broadcast receiving terminals 5 and 5a, but the following explanation deals with a case where the arrangement is applied to the broadcast receiving terminal 5a, as an example.

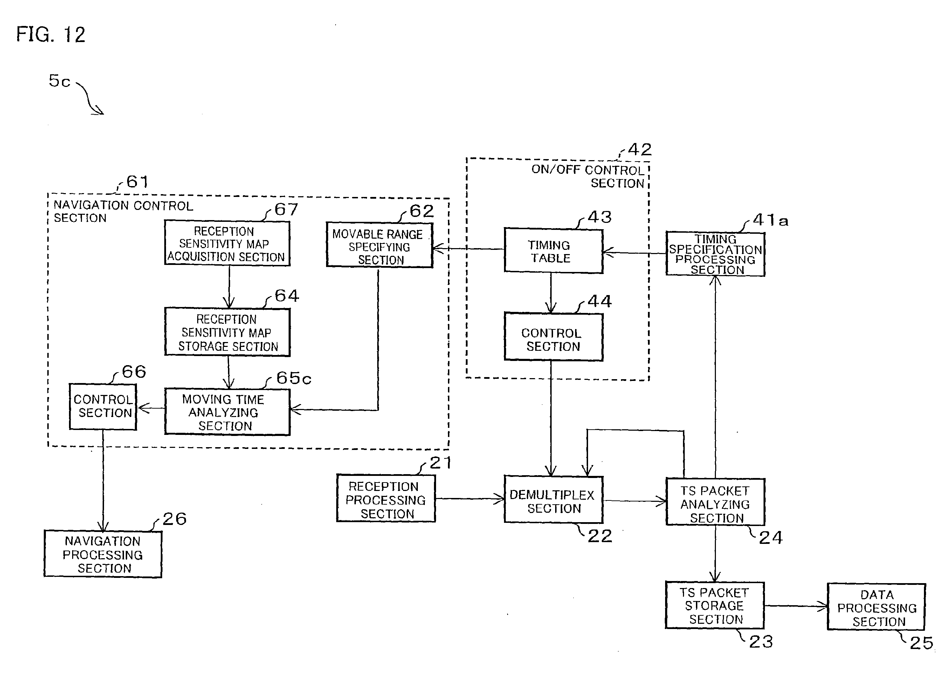

As illustrated in Fig. 12, a broadcast receiving terminal 5c of the modified example includes, instead of the reception sensitivity map acquisition section 63, a reception sensitivity map history updating section 67 that detects a reception sensitivity at predetermined timing (for example, a predetermined time interval), and stores, as a reception sensitivity history, the reception sensitivity in a reception sensitivity map acquisition section 63 so as to correlate with a position of the broadcast receiving terminal 5c at the timing. In this case, the reception sensitivity map acquisition section 63 corresponds to history storage means recited in Claims.

Instead of searching a place (i) which is shown as a place which is in a good reception sensitivity in a reception sensitivity map, (ii) which place is in a movable range in which a user can move until rebroadcast timing has come, and (iii) via which place a distance variation that is necessary to reach a destination is minimum, a moving time analyzing section 65c searches a place (proposed place to move) from places stored as places having a good reception sensitivity by the reception sensitivity map history updating section 67, which place (proposed place) is (i) in a movable range in which a user can move until the rebroadcast timing has come, and (ii) closest to a present position of the broadcast receiving terminal 5c. In the arrangement, a control section 66 may propose the place to move regardless of whether the broadcast receiving terminal 5c moves or not, and whether a destination is set or not.

Even in this case, the broadcast receiving terminal 5c proposes a place having a good reception sensitivity, thereby allowing a user to move the place having a good reception sensitivity more surely without having troubles.

Moreover, although the arrangement has a possibility to propose a user to go back the way the user has come, the arrangement has an advantage that the broadcast receiving terminal 5c can propose a place to move without communicating with an external device. In view of this, similarly to the arrangements (the broadcast receiving terminal 5a and the like) in which rebroadcast timing is determined by analyzing packets, it is possible that a broadcasting system 1c that can more surely notify a user of a position in a good radio wave condition is comparatively easily put into practice.

The above description deals with the arrangement in which the reception sensitivity map history updating section 67 is provided instead of the reception sensitivity map acquisition section 63. However, it is also possible to provide both of the sections 67 and 63 in a single broadcast receiving terminal. In such a case, the broadcast receiving terminal may change which of (a) a reception sensitivity map from a response processing section 54 and (b) a history, is to be referred for searching a proposed place to move, depending on whether or not the reception sensitivity map can be obtained from the response processing section 54, whether or not there is any user's instruction, or the like.

Further, in the present embodiment, in order that a reception state is to be changed, the broadcast receiving terminal 5c notifies a user to move a position in a good radio wave condition, but the arrangement is not limited to this. For example, in a case where a broadcast receiving terminal has a directional antenna, the broadcast receiving terminal may notify a user to change a direction of the antenna so that the antenna points an appropriate direction at rebroadcast timing.

Further, in the broadcast receiving terminals, the arrangement is explained such that a reception sensitivity is detected by a signal from the reception processing section 21 (for example, a tuner 32). However, a reception amount measuring device having a directivity may be provided so that a reception sensitivity of each place is detected. The arrangement makes it possible to detect a local radio wave condition, for example, in a room.

The broadcast receiving terminal is especially preferably used as a mobile broadcast receiving terminal, a broadcast receiving terminal equipped in a car. Such the broadcast receiving terminals encompass, for example, a mobile television receiver, a mobile radio receiver, a mobile phone device, a PHS, a navigation system, a PDA, a mobile game terminal.

Each of the embodiments deals with a case where each member constituting each device provided in the broadcasting system is "a functional block realized such that computing means such as a CPU executes a program code stored in a recording medium such as a ROM (Read Only Memory) or a RAM (Random Access Memory)". However, each block can be realized by way of hardware that carries out the similar process. Further, each block can be realized by a combination of hardware that carries out a part of the processes and the computing means that executes a program code that controls the hardware and carries out the residual processes. Moreover, even the members that are explained as hardware, among the above members, can be also realized by a combination of hardware that carries out a part of the processes and the computing means that carries out a program code that controls the hardware and carries out the residual processes. The computing means may be a simple body or may be such that a plurality of computing means that are connected via a bus and various communication paths provided in the device, execute a program code in combination. The TS packet storage section 23, the timing table 43, and each of the databases 11, 51, and 53 among the members may be a storage device itself such as a memory.

The program code that is directly executable by the calculation means, or a program as data that can generate a program code by processing such as the after-mentioned decompression is (a) stored in a recording medium so that the recording medium is distributed, or (b) distributed, i.e., transmitted by communication means for transmitting the program via a wired or wireless communication path. The program (the program code or the data) thus distributed is executed by the computing means.

In a case where the program is transmitted via a communication path, each transmission medium constituting the communication path propagates a signal string indicative of the program, thereby causing the program to be transmitted via the communication path. Further, in transmitting the signal string, a transmitting device may modulate a carrier wave by the signal string indicative of the program, thereby superimposing the signal string onto the carrier wave. In this case, a receiving device demodulates the carrier wave so that the signal string is reconstructed. On the other hand, in transmitting the signal string, the transmitting device may segment the signal string as digital data string into packets and transmit the packets. In this case, the receiving device concatenates a group of packets received so as to reconstruct the signal string. Furthermore, in transmitting the signal string, the transmitting device may multiplex the signal string with other signal strings by a time division method, a frequency division method, a code division method, or the like, and send the signal strings. In this case, the receiving device extracts each signal string from the multiplexed signal strings so as to reconstruct the signal strings. In either case, if the program can be transmitted via the communication path, then it is possible to obtain the similar effects.

Here, the recording medium for the distribution of a program is preferably removable. After the distribution of the program, the recording medium may or may not be removable. In addition, the recording medium may or may not be rewritable (writable) or volatile, be recordable by any method, and come in any shape at all, provided that the medium can hold the program. Examples of such a recording medium include tapes, such as magnetic tapes and cassette tapes; magnetic disks, such as floppy (registered trademark) disks and hard disks; and other discs, such as CD-ROMs, magneto-optical discs (MOs), mini discs (MDs), and digital versatile discs (DVDs). In addition, the recording medium may be a card, such as an IC card or an optical card; a semiconductor memory, such as a mask ROM, an EPROM, an EEPROM, or a flash ROM; or a memory provided inside a CPU or other computing means.

The program code may be such that it instructs the computing means regarding all the procedures of the processes. If there is already a basic computer program (for example, an operating system or library) which can be retrieved by a predetermined procedure to execute all or some of the processes, code or a pointer which instructs the computing means to retrieve that basic computer program can replace all or some of the processes.

In addition, the program storage format of the recording medium may be, for example, such that: the computing means can access the program for an execution as in an actual memory having loaded the program; the program is not loaded into an actual memory, but installed in a local recording medium (for example, an actual memory or hard disk) always accessible to the computing means; or the program is stored before installing in a local recording medium from a network or a mobile recording medium. In addition, the program is not limited to compiled object code. The program may be stored as source code or intermediate code generated in the course of interpretation or compilation. In any case, similar effects are obtained regardless of the format in which the recording medium stores the program, provided that decompression of compressed information, decoding of encoded information, interpretation, compilation, links, or loading to a memory or combinations of these processes can convert into a format executable by the computing means.

### INDUSTRIAL APPLICABILITY

As described above, the present invention can be preferably used broadly for a broadcast receiving terminal device such as a mobile terminal like a mobile phone device that can receive a terrestrial digital broadcast.

## Claims

1. A broadcast receiving terminal device, comprising:
receiving means for receiving a group of packets which are repeatedly broadcasted at a predetermined period without change in content;
selecting means for selecting target packets from the group of packets received by the receiving means;
packet missing detecting means for detecting, in the group of packets, a packet that has not been received properly;
rebroadcast timing predicting means for predicting rebroadcast timing of the packet detected by the packet missing detecting means; and
control means for controlling the selecting means so that the selecting means (i) stops an operation for at least a part of a period of time which comes before the rebroadcast timing has come and (ii) starts again the operation at the rebroadcast timing.

2. The broadcast receiving terminal device as set forth in claim 1, wherein:
the rebroadcast timing predicting means predicts the rebroadcast timing based on a result obtained when it accessed, via a network, to a broadcast period database in which the predetermined period in the broadcast is stored.

3. The broadcast receiving terminal device as set forth in claim 1, wherein:
the rebroadcast timing predicting means analyzes the group of packets received by the receiving means so as to predict the rebroadcast timing.

4. The broadcast receiving terminal device as set forth in claim 1, further comprising:
notification means for, in a case where the packet loss detecting means detects a packet missing, notifying a user to move to a position in a good radio wave condition until the rebroadcast timing has come.

5. The broadcast receiving terminal device as set forth in claim 4, further comprising:
navigation means for detecting a present position of the broadcast receiving terminal device, and for carrying out navigation of a route from the present position to a destination,
the notification means including:
movable range detection means for detecting a movable range in which the broadcast receiving terminal device can move until the rebroadcast timing has come;
radio wave condition map acquisition means for accessing to a radio wave condition database in which places and radio wave conditions are stored so as to be related to each other, and for acquiring a radio wave condition map indicative of a radio wave condition in each of the places in the movable range; and
navigation control means for (i) searching a place in the movable range, in which place a radio wave condition is better than a predetermined level, and via which place an increase in moving distance to the destination is minimum, and (ii) causing the navigation means to correct the navigation so that the user reaches the destination via the place.

6. The broadcast receiving terminal device as set forth in claim 4, further comprising:
history storage means for detecting a present position of the broadcast receiving terminal device, and for storing a history of a radio wave condition at the present position so as to correlate with the present position,
the notification means (i) searching, from positions stored in the history storage means, a position in which a radio wave condition is better than a predetermined level and to which the user can reach until the rebroadcast timing has come, and (ii) notifying the user to move to the position.

7. The broadcast receiving terminal device as set forth in any one of claims 1 through 6, which is any one of a mobile television receiver, a mobile radio receiver, a mobile phone device, a PHS, a navigation system, a PDA, and a mobile game terminal.

8. A broadcast receiving method comprising the steps of:
(a) receiving a group of packets which are repeatedly broadcasted at a predetermined period without change in content;
(b) selecting target packets from the group of packets received in the step (a);
(c) detecting, in the group of packets, a packet that has not been received properly;
(d) predicting rebroadcast timing of the packet detected in the step (c); and
(e) controlling the step (b) such that (i) the step (b) is stopped for at least a part of a period of time which comes before the rebroadcast timing has come, and (ii) the step (b) is started at the rebroadcast timing.

9. A program that causes a computer to function as each of the means of a broadcast receiving terminal device as set forth in any one of claims 1 through 7.

10. A computer readable recording medium in which a program as set forth in claim 9 is stored.
